Europäisches Patentamt

European Patent Office

Office européen des brevets

(11) Numéro de publication: **0 241 379 B1**

# FASCICULE DE BREVET EUROPEEN

(45) Date de publication de fascicule du brevet:
27.12.91

(51) Int. Cl.⁵: **G06K 1/12**, G07F 7/08, G07F 7/02

(21) Numéro de dépôt: **87400802.2**

(22) Date de dépôt: **09.04.87**

(54) **Dispositif de traitement de cartes à mémoire électronique pour la fourniture de prestations.**

(30) Priorité: **11.04.86 FR 8605181**

(43) Date de publication de la demande:
**14.10.87 Bulletin 87/42**

(45) Mention de la délivrance du brevet:
**27.12.91 Bulletin 91/52**

(84) Etats contractants désignés:
**BE CH DE ES GB IT LI NL SE**

(56) Documents cités:
**EP-A- 0 051 579**
**EP-A- 0 061 722**
**EP-A- 0 172 476**
**FR-A- 2 485 771**
**FR-A- 2 554 262**

(73) Titulaire: **SCHLUMBERGER INDUSTRIES**
**50, avenue Jean Jaurès**
**F-92120 Montrouge(FR)**

(72) Inventeur: **Mollet, Jean Paul**
**47, Elysée 2**
**F-78170 La Celle Saint Cloud(FR)**

(74) Mandataire: **Dronne, Guy**
**Giers Schlumberger 12 Place des Etats-Unis**
**B.P. 121**
**F-92124 Montrouge(FR)**

Rank Xerox (UK) Business Services

## Description

La présente invention a pour objet un dispositif de traitement de cartes à mémoire électronique pour la fourniture de prestations.

Il existe de plus en plus d'installations qui permettent d'obtenir, à l'aide d'une carte à mémoire électronique, la fourniture de prestations. L'usager achète auprès de l'organisme fournisseur de prestations une carte à mémoire électronique dans laquelle est chargée une certaine valeur fiduciaire. L'installation comprend d'une part un dispositif de traitement de la carte à mémoire, en général appelé "lecteur" et d'autre part un poste de fourniture de la prestation commandé par le dispositif de traitement. Cette prestation peut être, par exemple, l'établissement d'une communication téléphonique. Deux cas peuvent se présenter, soit comme dans le cas du téléphone, le détenteur de la carte utilise la prestation et le dispositif de traitement débite dans la mémoire de la carte le montant correspondant au fur et à mesure de l'utilisation jusqu'à concurrence bien entendu d'un montant maximal; soit l'utilisateur affiche lui-même directement ou indirectement le montant de la prestation qu'il veut recevoir, par exemple, pour l'achat d'un objet, et si le montant disponible dans la mémoire de la carte est suffisant, la machine de traitement va diminuer d'autant le montant encore disponible dans la mémoire de la carte.

En outre, il existe différents types de cartes à mémoire elctronique. Le type le plus simple appelé "pré-payé" comporte dans sa mémoire une information identifiant la prestation qui peut être obtenue à l'aide de cette carte et un certaine nombre de positions mémoire qui correspondent à autant d'unité de valeur que l'usager peut utiliser pour recevoir la prestation. Au fur et à mesure de l'utilisation de la carte, les positions de mémoire sont "grillées" jusqu'à ce que la totalité des positions mémoire soit utilisée. Dans d'autres cas, la carte comporte en mémoire non seulement des informations quant à la nature de la prestation accessible, mais également des éléments d'identification du porteur de la carte. La carte comporte toujours des zones de mémoire pour mémoriser les montants des prestations demandées et obtenues jusqu'à épuisement du montant maximal pour lequel la carte a été achetée.

Quel que soit le type de prestations concerné et quel que soit le type de carte à mémoire électronique considéré, il se pose toujours pour le détenteur de la carte le problème de connaître au moins approximativement le montant du solde encore disponible dans le carte pour obtenir de nouvelles prestations. Certes les dispositifs de traitement comportent des moyens d'affichage d'informations et notamment d'affichage du montant du solde encore disponible dans la carte.

Cependant, le détenteur de la carte en dehors de cette circonstante particulière n'a pas de moyen de connaître le montant de ce solde. Cela est particulièrement gênant pour l'usager pour décider du moment auquel il doit acquérir une nouvelle carte dans le cas des cartes du type "pré-payé" ou du moment où il doit faire recharger sa carte à une nouvelle valeur fiduciaire.

Par ailleurs, on peut très bien concevoir des dispositifs de traitement de cartes à mémoire électronique qui soient utilisables par des personnes aveugles, mais il est clair que l'information sur le montant du solde encore disponible ne peut leur être accessible avec des dispositifs de traitement connus.

Le document FR-A-2 554 262 décrit un lecteur de cartes à mémoire électronique qui permet de traiter les informations stockées dans la mémoire de la carte mais qui ne permet pas d'écrire sur le corps de la carte une information directement lisible correspondant aux informations écrites dans la mémoire.

Le document FR-A-2 485 771 décrit un lecteur pour cartes à piste magnétique qui permet en outre d'imprimer sur le corps de la carte une information visuelle correspondant à des montants mémorisés dans la piste magnétique. Cependant ce lecteur n'est pas adapté au traitement de cartes à mémoire électronique.

Enfin, le document EP-A-0 061 722 décrit une carte dont une face est recouverte d'un matériau électro-sensible dont on peut modifier localement l'état à l'aide de plages conductrices pour inscrire ainsi des informations lisibles directement. Mais ce moyen d'inscription est la seule mémoire de la carte.

Pour remédier à ces inconvénients, un objet de la présente invention est de fournir un système de traitement de cartes à mémoire électronique qui permette à l'usager de connaître à tout moment au moins le montant approximatif du solde encore disponible dans sa carte.

Pour atteindre ce but, selon l'invention, le système de traitement de cartes à mémoire électronique pour la fourniture de prestations comprend :

une pluralité de cartes à mémoire et au moins un dispositif de traitement desdites cartes ;

chaque carte comportant un corps, des plages externes de contact électrique et un circuit intégré placé dans le corps de la carte et relié électriquement auxdites plages, ledit circuit intégré comportant des moyens pour mémoriser des montants au fur et à mesure de l'utilisation de la carte ; et

ledit dispositif de traitement comprenant des moyens de traitement et d'alimentation électrique du circuit de la carte, des moyens fixes de connexion électrique pour relier électriquement par l'intermédiaire desdites plages de contact, ledit circuit de la carte aux moyens de traitement et d'alimentation lorsque ladite carte est dans une position fixe de traitement, lesdits moyens de traitement étant aptes à lire dans les moyens de mémorisation de la carte une information de montant et à commander l'écriture, dans lesdits moyens mémoire, d'un nouveau montant,

caractérisé en ce que lesdits moyens de traitement comprennent en outre des moyens pour comparer le montant mémorisé dans le circuit intégré de la carte à des seuils de montant prédéterminés, et en ce que ledit dispositif de traitement comprend des moyens fixes selon la direction d'introduction de la carte pour effectuer un marquage sur le corps de carte, lorsque celle-ci est en position de traitement, à un emplacement représentatif du montant mémorisé dans la carte, en fonction des résultats de ladite comparaison.

On comprend ainsi que le détenteur de la carte peut à tout moment avoir une idée approximative du crédit dont il peut encore disposer à l'aide de sa carte à mémoire. En outre, comme l'information sur le solde encore disponible est présente dans les moyens de traitement du dispositif de traitement des cartes, la commande des moyens de marquage ne modifie pas de façon sensible la structure du dispositif de traitement de cartes à mémoire, et n'en augmente donc pas sensiblement le coût.

D'autres caractéristiques et avantages de l'invention apparaîtront plus clairement à la lecture de la description qui suit de plusieurs modes de réalisation de l'invention, donnés à titre d'exemples non limitatifs. La description se réfère aux dessins annexés sur lesquels :

- la figure 1 est une vue partielle de dessus d'un dispositif de traitement de cartes muni de moyens de marquage selon un premier mode de mise en oeuvre de l'invention ;
- la figure 2 est une vue en coupe verticale selon la ligne II-II de la figure 1 ;
- la figure 2a est un schéma montrant le circuit de commande des moyens de marquage représentés sur les figures 1 et 2 ;
- la figure 3 est une vue de dessus d'un dispositif de traitement de cartes à mémoire électronique comportant un deuxième mode de réalisation des moyens de marquage de la carte ;
- la figure 3a est un schéma montrant le circuit de commande du système de marquage représenté sur la figure 3 ;
- la figure 4 est une vue en coupe verticale d'un dispositif de traitement de carte selon une variante de réalisation de la figure 2 ;
- la figure 5 est une vue en coupe verticale d'un quatrième mode de réalisation des moyens de marquage de la carte utilisant un laser ; et
- la figure 5a est une vue du dos d'une carte à mémoire électronique montrant le type de marquage obtenu avec le système de marquage de la figure 5.

Les cartes à mémoire électronique sont maintenant bien connues. Pour en trouver une description détaillée on pourra se référer aux demandes de brevet français Nos. 2 547 440 du 09.06.83 et 2 555 780 du 29.11.83 déposées au nom de la demanderesse. Dans la description qui suit on ne décrira que les éléments essentiels de la carte intervenant dans la définition de l'invention. De même, les dispositifs de traitement de cartes à mémoire électronique, qui par simplification seront appelés ultérieurement dans la description "lecteurs de cartes", sont également bien connus. Pour en trouver une description plus détaillée on pourra se reporter aux demandes de brevets français Nos. 2 554 260 du 27.10.83 et 2 554 262 du 28.10.83 déposées au nom de la demanderesse. Dans la description qui suit, on ne décrira donc que les parties du lecteur de carte qui interviennent dans la définition de l'invention.

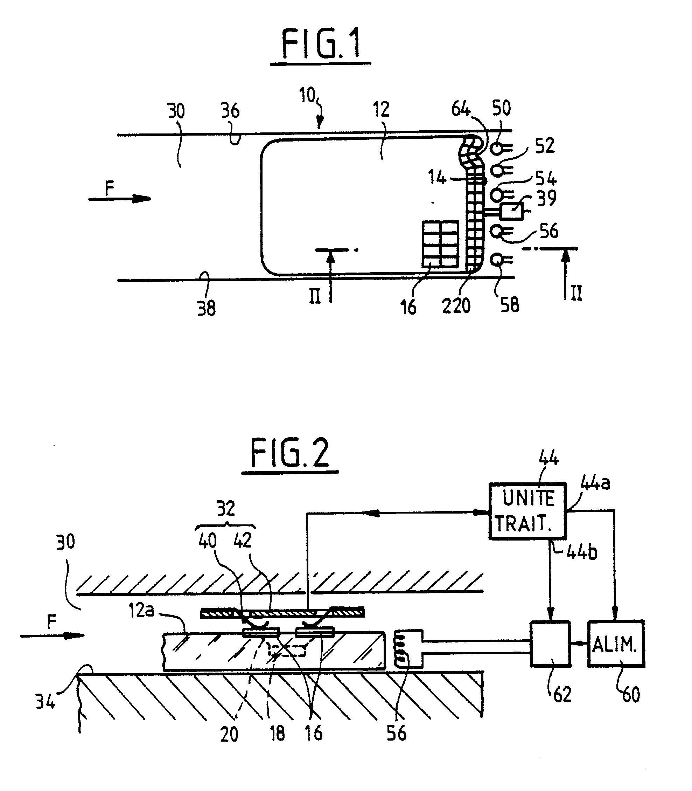

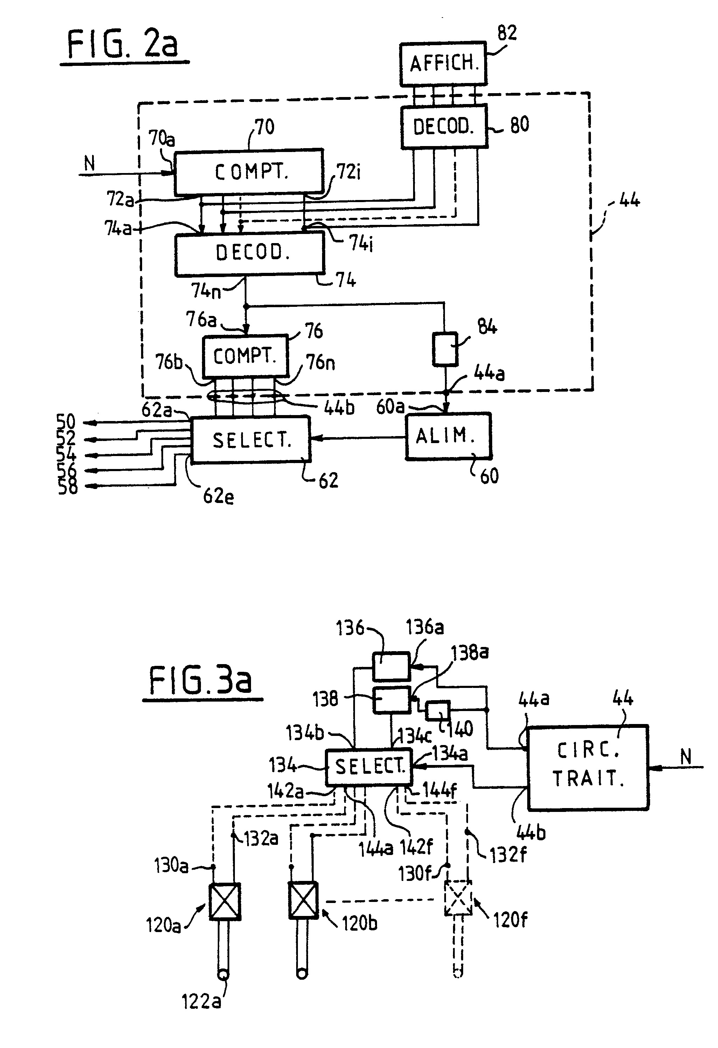

En se référant tout d'abord aux figures 1, 2 et 2a, on va décrire un premier mode de réalisation de l'invention qui fait intervenir un marquage de la carte à l'aide de résistances chauffantes. Sur les figures 1 et 2, on a représenté une carte à mémoire électronique 10 qui, dans l'exemple décrit, comprend un corps de carte 12 réalisé en un matériau thermoplastique tel que du PVC. Le corps de carte 12 a une forme générale rectangulaire et comporte notamment un bord avant 14 qui est celui qu'on introduit en premier dans le lecteur de carte. Sur une de ses faces principales, par exemple la face 12a, la carte comporte un certain nombre de plages de contact électrique 16. Le plus souvent, il y en a huit. Comme le montre de façon simplifiée la figure 2, la carte à mémoire électronique comporte également une pastille semi-conductrice 18 dans laquelle est réalisé un circuit intégré. La pastille 18 est, de préférence, noyée dans le corps 12 de la carte et les bornes de la pastille 18 sont reliées aux plages de contact 16 par des liaisons électriques 20.

Le lecteur de cartes comporte un couloir d'introduction 30 servant au guidage de la carte jusqu'à une tête de lecture/écriture 32 disposée dans ce couloir 30. Le couloir d'introduction 30 est limité par un plancher 34 et deux cloisons latérales 36 et 38. Le déplacement de la carte 10 depuis la fente d'introduction non représentée sur la figure, jusqu'à la position de lecture peut être effectué manuellement ou provoqué par un dispositif d'entraînement. L'arrivée de la carte dans la position adéquate de lecture est détectée par un capteur de présence tel que 39. La tête de lecture 32 est constituée essentiellement par autant de contacts électriques 40 qu'il y a de plages de contact 16 sur la carte. Les contacts électriques 40 sont montés sur un support d'isolant 42 qui comporte de plus des pistes conductrices pour relier chacun des contacts électriques 40 à une unité de traitement et d'alimentation électrique référencée 44. L'unité de traitement 44 a pour fonction d'une part de gérer le dialogue dans le sens de lecture et écriture entre le lecteur et le circuit intégré de la carte et de commander l'application au circuit intégré 18 de la tension de fonctionnement et éventuellement de la tension d'écriture. L'unité de traitement a par ailleurs pour fonction d'effectuer des opérations arithmétiques ou logiques sur les informations lues dans la mémoire de la carte et sur des informations introduites directement au niveau du lecteur de cartes par exemple à l'aide d'un clavier.

Comme cela est bien connu le circuit intégré 18 de la carte comporte essentiellement une ou plusieurs mémoires, des circuits d'écriture et de lecture dans la mémoire, un circuit de contrôle d'accès à la mémoire, et dans certains cas, une unité de traitement arithmétique et logique. La mémoire ou les mémoires comportent une zone inscriptible et lisible pour mémoriser des données, en particulier des montants de transaction, des zones non inscriptibles pour contrôler les prestations auxquelles la carte donne droit et, éventuellement, pour contrôler que la carte est bien utilisée par son légitime détenteur, et enfin dans certains cas, des programmes pour contrôler le fonctionnement de l'unité arithmétique et logique.

L'invention comme on l'a déjà indiqué brièvement consiste à prévoir dans le lecteur de carte des moyens pour marquer le corps de carte en relation avec les montants de transaction déjà consommés, c'est-à-dire déjà mémorisés dans le circuit de mémoire de la carte.

Le mode de réalisation du dispositif de marquage représenté sur les figures 1 et 2 est plus particulièrement adapté au cas des cartes du type pré-payé. On rappelle que ce sont des cartes dans lesquelles la zone de mémoire servant à enregistrer les montants de transaction est constituée par un certain nombre de points mémoire, chaque point mémoire correspondant à une unité de valeur unique. La zone de mémoire comporte un nombre de points mémoire correspondant au montant total de la carte. Au fur et à mesure de l'utilisation de la carte le lecteur change d'état de façon irréversible autant de points mémoire que l'usager a consommé d'unités de valeur chaque unité de valeur correspondant par exemple à une unité de communication téléphonique.

Le dispositif de marquage représenté sur les figures 1 et 2 permet d'effectuer une marque sur le corps de la carte à chaque fois qu'une tranche de 20 % du montant total initial disponible est franchie. Pour cela, le lecteur de carte comprend cinq microrésistantes chauffantes 50 à 58 qui sont disposées dans le couloir d'introduction 30 et alignées selon une direction perpendiculaire à la direction F d'introduction de la carte. Ces résistances pourraient être remplacées par tout autre élément chauffant. Les résistances 50 à 58 sont placées de telle manière que, lorsque la carte est en position de lecture, ce qui est détecté par le capteur 39, elles ne soient pas en contact avec le bord avant 14 de la carte mais en soient à proximité immédiate. Le dispositif de marquage comporte en outre un circuit d'alimentation 60 des résistances dont la sortie est reliée à un sélecteur 62. Le sélecteur 62 comporte cinq sorties, chaque sortie étant reliée à une des résistances 50 à 58. Le circuit d'alimentation 60 est commandé par un signal délivré par l'unité de traitement 44 sur sa sortie 44a. De même le sélecteur 62 est commandé par un signal délivré par l'unité de traitement sur sa sortie 44b. L'unité de traitement 44 reçoit, en permanence, l'information correspondant au nombre d'unités de valeur consommées au fur et à mesure que l'utilisateur reçoit des prestations. L'unité de traitement 44 compare ce nombre à des seuils correspondant respectivement à 20 %, 40 %, etc. de la capacité totale de la carte. A chaque fois qu'un seuil est dépassé, l'unité de traitement émet sur sa sortie 44b un signal numérique donnant le rang du seuil qui vient d'être dépassé. La valeur de ce signal est appliquée à l'entrée du sélecteur 62 qui, en réponse, commande la liaison entre la source d'alimentation 60 et la résistance 50 à 58 dont le rang correspond au seuil qui vient d'être franchi. L'unité de traitement 44 délivre alors sur sa sortie 44a un signal de commande qui provoque l'activation de la source d'alimentation 60 pour qu'elle applique à la résistance sélectionnée un courant d'une intensité prédéterminée pendant un temps donné. L'énergie électrique appliquée à la résistance correspondante est déterminée de telle manière que, par rayonnement la résistance provoque sur le bord 14 du corps de la carte une encoche 64 de faible profondeur.

Au fur et à mesure des utilisations successives de la carte dans différents dispositifs de traitement, les différents seuils qui sont franchis font l'objet d'un marquage correspondant sur le bord 14 de la carte. Le titulaire de la carte peut donc savoir à tout instant dans quelle tranche de 20 % de la capacité maximale de sa carte il se trouve.

On comprend que c'est lorsque la carte est près d'être épuisée qu'il est le plus intéressant d'informer l'utilisateur du nombre d'unités de valeur encore disponibles. Selon un autre mode de réalisation, la définition des seuils commandant l'alimentation des résistances 50 à 58 de marquage est modifiée de telle manière, par exemple, que la première résistance 50 corresponde à un seuil égal à 80 % du maximum, la résistance 52 à 85 %, etc. jusqu'à la résistance 58 qui correspond à l'épuisement total de la carte.

La figure 2a montre un mode de réalisation de la partie de l'unité de traitement 44 qui permet de commander le sélecteur 62 et le circuit 60 d'alimentation des résistances 50 à 58. Elle comprend un compteur binaire 70 qui reçoit sur son entrée 70a les impulsions correspondant au nombre n d'unités de valeur déjà utilisées dans la mémoire de la carte. Le compteur 70 a une capacité supérieure au nombre maximal d'unités de valeur disponibles dans la carte. Les sorties d'état 72a à 72i du compteur 70 sont reliées aux entrées 74a à 74i d'un décodeur numérique 74. Le décodeur 74 est organisé pour délivrer une impulsion sur sa sortie 74n à chaque fois que le nombre binaire appliqué sur ses entrées 74a à 74i atteint des valeurs $N_1, N_2...N_5$ égales aux seuils pour lesquels les résistances 50 à 58 doivent être alimentées. La sortie 74n du décodeur 74 est reliée à l'entrée 76a d'un compteur binaire 76. La sorties d'état 76b à 76n du compteur 76 fournissent, sous forme binaire, le nombre de seuils franchis, c'est-à-dire le rang de la résistance qu'il faut alimenter. Les sorties 76b à 76n forment en même temps la sortie 44b de l'unité de traitement 44 qui est reliée elle-même à l'entrée de commande du sélecteur 62.

Les sorties 72a à 72i du compteur 70 sont également reliées à un décodeur 80 qui commande un panneau d'affichage 82 du lecteur de cartes. Enfin, la sortie 74n du décodeur 74 est reliée à la sortie 44a du circuit de traitement 44 par l'intermédiaire d'un circuit à retard 84. La sortie 44a est elle-même reliée à l'entrée de commande 60a de la source d'alimentation 60.

Le fonctionnement de ce circuit découle de la description précédente. A chaque fois que l'état du compteur 70 dépasse un des seuils $N_1, N_2...N_5$, le détecteur 74 délivre une impulsion. Le compteur 76 contient donc en permanence la nombre de seuils franchis et donc le rang de la résistance à alimenter. L'état du compteur 76 sélectionne la sortie correspondante 62a à 62e du sélecteur 62. Avec un retard fixé par le circuit 84, l'impulsion délivrée commande également l'activation du circuit d'alimentation 60.

Il va de soi que le nombre de résistances peut être modifié et qu'il est seulement limité par la place disponible sur le bord avant de la carte. De même, au lieu d'effectuer le marquage sur le bord avant de la carte, celui-ci pourrait être réalisé sur un des bords latéraux. Dans ce cas, il faut disposer les résistances chauffantes selon la direction d'une des cloisons latérales du couloir d'introduction.

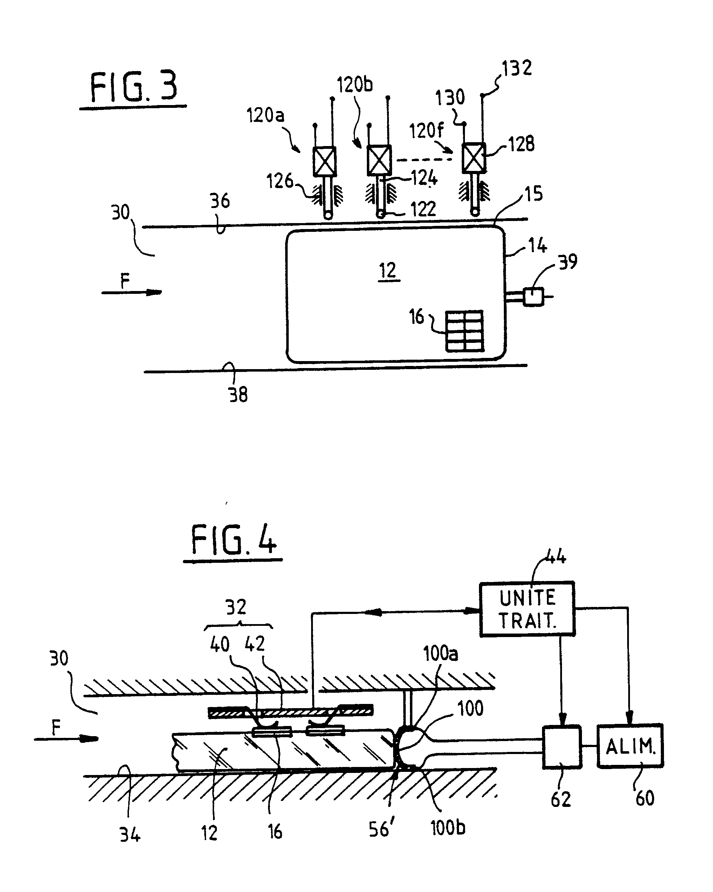

La figure 4 qui est très semblable à la figure 2 montre une variante de réalisation des résistances servant au marquage du corps de la carte. Chaque résistance 50' à 58' est constituée par une lame élastique 100 dont les extrémités 100a et 100b sont fixes. Ces résistances sont, de préférence, réalisées en bronze de beryllium.

L'élasticité des résistances permet d'assurer un contact entre les résistances et le bord avant 14 du corps de carte même si les cotes du corps de carte ne sont pas exactement égales au cotes normalisées. Le marquage est obtenu par le contact entre le corps de la carte et celle des résistances 50' à 58' qui est alimentée et sa pénétration dans le matériau.

Dans les modes de réalisation décrit précédemment les résistances chauffantes sont fixes et leur nombre est égal au nombre de seuils. En variante l'ensemble de marquage peut ne comprendre qu'un seul élément de marquage. L'élément de marquage peut alors être déplacé parallèlement au bord de la carte où le marquage est effectué, pour être amené dans une parmi n positions correspondant aux n seuils. L'élément de marquage peut être déplacé par un système mécanique mu par un micro-moteur. La course que doit provoquer le moteur est commandée par le nombre contenu dans le compteur 76 de la figure 2a.

La figure 3 montre un troisième mode de réalisation de l'invention dans lequel le marquage des unités consommées est réalisé sur un bord longitudinal 15 du corps de la carte. Pour éviter que les éléments de marquage ne risquent de gêner l'introduction de la carte dans le couloir 30, ces éléments sont escamotés en dehors des phases de marquage. Chaque élément de marquage 120a à 120f est constitué par un élément électrique chauffant 122 monté à l'extrémité d'une tige 124 montée coulissante dans un logement 126 perpendiculaire à la paroi 36 du couloir d'introduction 30. Les déplacements de la tige 124 sont commandés par un électro-aimant 128. Lorsque l'électro-aimant 128 n'est pas alimenté, la tige occupe une position rentrée comme cela est montré sur la figure 3. Lorsque l'électro-aimant 128 est alimenté, l'élément de marquage 122 fait saillie dans le passage 30. Chaque élément de marquage 120 comporte une borne 130 pour la commande de l'électro-aimant 128 et une borne 132 pour l'alimentation de l'élément chauffant 122.

La figure 3a montre plus en détail la commande des éléments de marquage 120a, 120b...120f. Le circuit de traitement 44 qui est identique à celui qui a été décrit en liaison avec la figure 2a délivre, sur sa sortie 44a un signal de commande d'alimentation et, sur sa sortie 44b un signal numérique donnant le rang de l'élément de marquage qui doit être activé. La sortie 44b est reliée à l'entrée de commande 134a d'un sélecteur double 134. Le sélecteur comprend deux entrées principales 134b et 134c qui sont respectivement reliées, à un premier circuit d'alimentation 136 pour provoquer l'alimentation de l'élément chauffant 122, et à un deuxième circuit d'alimentation 138 pour provoquer l'alimentation de l'électro-aimant 128. L'entrée de commande 136a du circuit d'alimentation 136 est reliée à la sortie 44a du circuit de traitement 44, alors que l'entrée de commande 138a du circuit d'alimentation 138 est également reliée à la sortie 44a mais à travers un circuit à retard 140.

Le sélecteur double 134 comprend autant de paires de sortie 142, 144 qu'il y a d'éléments de marquage 120a à 120f. Chaque sortie 142 est reliée à la borne de commande 130 d'une élément de marquage 120, et chaque sortie 144 est reliée à la borne 132 d'un élément de marquage 120. Le sélecteur 134 d'un élément de marquage 120. Le sélecteur 134 permet de relier les entrées principales 134b, 134c à une paire de sortie 142, 144, le rang de la paire de sortie concernée étant déterminé par la valeur numérique du signal appliqué sur son entrée de commande.

Le fonctionnement du circuit représenté sur la figure 3a découle de la description précédente. Lorsque le nombre N d'unités de valeur consommées dépasse un seuil $N_1$ à $N_5$, la sortie 44b du circuit de traitement émet un signal numérique dont la valeur correspond au range de l'élément de marquage 120a à 120f à activer. Le sélecteur 134 relie son entrée 134b à sa sortie 142 de rang correspondant et son entrée 134c à sa sortie 144 du même rang. Lorsqu'un signal de commande apparaît sur la sortie 44a du circuit de traitement 44, le circuit 136 délivre la tension de chauffage qui est appliquée à l'élément chauffant sélectionné à travers le sélecteur 134. Puis, avec un retard défini par le circuit 140, qui correspond au temps d'échauffement de l'élément 122, le circuit d'alimentation 138 délivre une tension qui est appliquée à l'électro-aimant 128 de l'élément de marquage sélectionné. L'élément de marquage 120 correspondant fait saillie dans le passage d'introduction 30 et réalise une marque sur le bord longitudinal 15 du corps de la carte à l'endroit prévu.

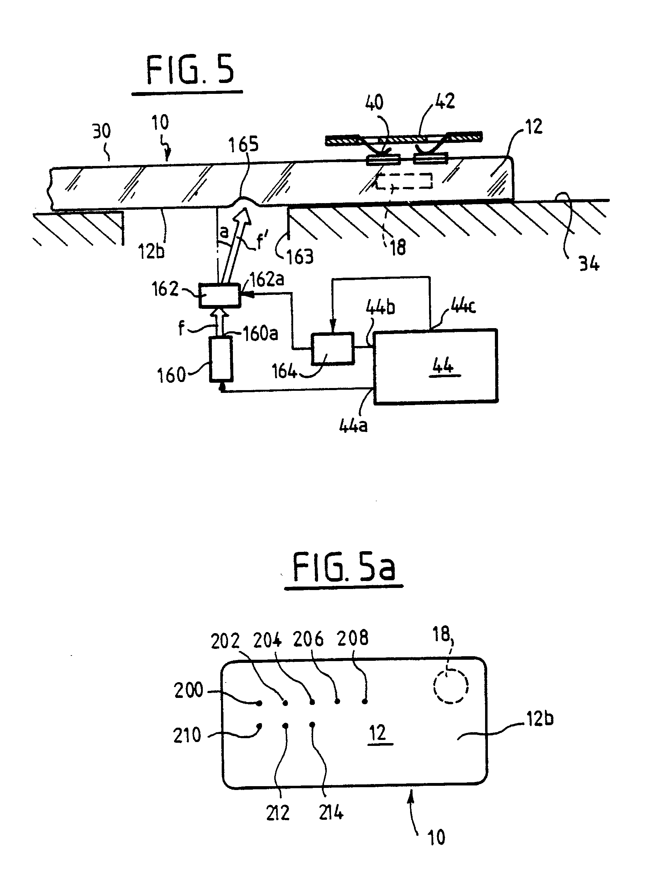

La figure 5 illustre un quatrième mode de réalisation du système de marquage permettant de réaliser des marques sur une des faces principales du corps 12 de la carte, par exemple, sur sa face inférieure 12b. Le système de marquage comprend un laser 160 émettant un faisceau dont l'énergie est suffisante pour provoquer une marque 165 dans le fond 12b de la carte sans en changer par ailleurs les dimensions. Le laser 160 est associé à un système optique commandable 162 pour modifier la direction du faisceau f émis par le laser 160. Le système optique 162 est disposé entre la face de sortie 160a du laser 160 et une fenêtre 163 ménagée dans le plancher 34 du couloir d'introduction 30. Le fenêtre 163 est disposée de telle manière que, lorsque la carte 10 est en position de lecture/écriture, la zone du fond 12b de la carte ainsi dégagée soit suffisamment éloignée de la pastille semi-conductrice 18 noyée dans le corps 18 de la carte et de la piste magnétique, si elle existe, disposée sur le fond 12b de la carte.

Le système optique 162 permet, sous l'effet du signal de commande appliqué à son entrée 162a de dévier le faisceau f pour fournir à sa sortie un faisceau f' présentant pour chaque valeur du signal de commande un point d'impact donné sur le fond 12b du corps de carte 12. La sortie 44b du circuit de traitement délivre sur sa sortie 44b un signal numérique représentatif du rang du seuil d'unités de valeur qui a été franchi. La sortie 44b est reliée à un circuit de codage 164. La sortie du circuit de codage est reliée à l'entrée de commande 162a du système optique 162. La valeur du signal codé définit une direction du faisceau f' pour provoquer la formation d'une marque 165 sur la face 12b du corps de carte à l'endroit convenable. La déviation du faisceau f' est réalisée dans un plan fixe qui est parallèle à la direction d'introduction de la carte. On pourrait utiliser un système similaire mettant en oeuvre un générateur à ultrasons.

Comme on l'a indiqué précédemment, il existe également des cartes à mémoire revalidable ou rechargeable, c'est-à-dire que, lorsqu'un premier nombre maximal d'unités de valeur a été consommé par le détenteur de la carte, celui-ci peut faire recharger sa carte moyennant paiement, à un nouveau nombre maximal d'unités de valeur utilisable qui sera égal au précédent.

Il est possible de modifier le dispositif décrit précédemment pour permettre un marquage des unités consommées pour les rechargements successifs de la carte. Le circuit de traitement 44 lit dans la mémoire de la carte, non seulement le nombre d'unités de valeur consommées dans la dernière tranche rechargée ou revalidée, mais encore le nombre de rechargements ou revalidations effectuées. L'information du nombre de revalidations est délivrée sur la sortie supplémentaire 44c du circuit de traitement 44. Cette information est également appliquée à une entrée du circuit de décodage 164. Le signal délivré par le décodeur 164 et appliqué à l'entrée 162a du système optique 162 contient deux informations : l'information du seuil d'unités de valeur de la tranche en cours qui vient d'être franchi, et l'information du numéro de la tranche en cours d'utilisation. La première information commande le système optique 162 pour provoquer une déviation du faisceau f' dans un plan parallèle à la direction de la longueur de la carte (angle a de la figure 5). La deuxième information commande le système optique pour provoquer une déviation du faisceau f' dans un plan perpendiculaire au plan cité précédemment d'un angle b non représenté sur la figure 5. On comprend ainsi que, à chaque tranche, il correspond une valeur donnée de l'angle b, et la valeur de l'angle a correspond aux nombre d'unités de valeur consommées dans cette tranche.

La figure 5a montre les marques ainsi réalisées sur le dos 17 de la carte ; les marques 200 à 208 correspondent à l'épuisement d'une première tranche d'unités de valeur dans le cas où cinq seuils sont prévus. Les marques 210 à 214 indiquent que la deuxième tranche est en cours d'utilisation et que dans cette tranche trois seuils ont déjà été franchis.

Il va de soi que pour réaliser le marquage, le système de traitement de cartes à mémoire électronique pourrait également comporter des poinçons capables de créer sur une des faces principales du coprs de carte des marques du type représentées sur la figure 5a.

Il faut ajouter que, dans le cas où le marquage est réalisé par chauffage sur la tranche de la carte, c'est-à-dire par fusion localisée du matériau constituant le corps de la carte, il peut être intéressant de prévoir un graphisme particulier sur la portion d'une des faces principales du corps de carte disposée à proximité du bord sur lequel le marquage est effectué. Ce graphisme est par exemple constitué par un quadrillage 220 comme cela est représenté sur la figure 1. L'échauffement du matériau plastique qui provoque l'encoche 64 entraîne également une distorsion 222 importante du quadrillage dans la zone échauffée ce qui rend la détection visuelle de la marque 64 encore plus aisée.

## Revendications

1. Système de traitement de cartes à mémoire électronique pour la fourniture de prestations, le système comprenant :

une pluralité de cartes à mémoire (10) et au moins un dispositif de traitement desdites cartes ;

chaque carte comporte un corps (12), des plages externes de contact électrique (16) et un circuit intégré (18) placé dans le corps de la carte et relié électriquement auxdites plages, ledit circuit intégré comportant des moyens pour mémoriser des montants au fur et à mesure de l'utilisation de la carte ; et

ledit dispositif de traitement comprend des moyens de traitement et d'alimentation électrique (44) du circuit de la carte, des moyens fixes de connexion électrique (40, 42) pour relier électriquement par l'intermédiaire desdites plages de contact (16), ledit circuit (18) de la carte aux moyens de traitement et d'alimentation (44) lorsque ladite carte est dans une position fixe de traitement, lesdits moyens de traitement étant aptes à lire dans les moyens de mémorisation de la carte une information de montant et à commander l'écriture, dans lesdits moyens mémoire, d'un nouveau montant,

caractérisé en ce que lesdits moyens de traitement comprennent en outre des moyens pour comparer le montant mémorisé dans le circuit intégré (18) de la carte à des seuils de montant prédéterminés, et en ce que ledit dispositif de traitement comprend des moyens fixes selon la direction d'introduction de la carte pour effectuer un marquage sur le corps de carte, lorsque celle-ci est en position de traitement, à un emplacement représentatif du montant mémorisé dans la carte, en fonction des résultats de ladite comparaison.

2. Dispositif de traitement selon la revendication 1, caractérisé en ce que lesdits moyens de traitement comprennent des moyens (70, 74, 76) pour comparer le montant déjà consommé à n seuils de montant prédéterminés ($N_1$, $N_5$) et des moyens (60, 62, 134, 136, 138) pour commander, en réponse auxdits moyens de comparaison, le marquage du corps de la carte à un emplacement correspondant à celui desdits seuils qui a été atteint.

3. Dispositif de traitement selon la revendication 2 caractérisé en ce que les moyens de marquage comprennent n éléments distincts de marquage, chaque élément de marquage (50 à 58, 50' à 58', 122a à 122f), étant associé à un desdits seuils.

4. Dispositif de traitement selon la revendication 3 caractérisé en ce que lesdits éléments de marquage sont des éléments chauffants, (50 à 58, 50' à 58') chaque élément chauffant étant apte à réaliser une encoche sur le bord de la carte (14, 15) lorsqu'elle est alimentée.

5. Dispositif de traitement selon la revendication 2 caractérisé en ce que lesdits n seuils partage la capacité totale de la carte, en montants, en n parties égales.

6. Dispositif de traitement selon la revendication 2, caractérisé en ce que le premier des n seuils correspond à une partie de la capacité totale de la carte, en montant, supérieure aux parties de la capacité totale de la carte séparant deux seuils consécutifs.

7. Dispositif de traitement selon la revendication 2, caractérisé en ce que le marquage de la carte est réalisé sur le bord du corps de la carte qui est introduit en premier dans ledit dispositif de traitement.

8. Dispositif de traitement selon la revendication 2, caractérisé en ce que le marquage de la carte est réalisé sur un bord du corps de la carte disposé parallèlement à la direction d'introduction.

9. Dispositif de traitement selon la revendication 2, caractérisé en ce que le marquage de la carte est réalisé sur une des faces principales du corps de la carte.

## Claims

1. System for processing electronic memory cards for the provision of services, the system comprising:

a plurality of memory cards (10) and at least one device for processing the said cards;

each card comprises a body (12), external areas for electrical contact (16) and an integrated circuit (18) placed inside the body of the card and connected electrically to the said areas, the said integrated circuit comprising means for memorising amounts as and when the card is used; and

the processing device comprises means (44) for processing and electrically powering the circuit of the card, fixed means of electrical connection (40, 42) for electrically connecting, by way of the said contact areas (16), the said circuit (18) of the card to the processing and powering means (44) when the said card is in a fixed processing position, the said processing means being able to read an amount datum from the memorising means of the card and to command the writing, into the said memory means, of a new amount, characterised in that the said processing means further comprise means for comparing the amount memorised in the integrated circuit (18) of the card with predetermined amount thresholds, and in that the said processing device comprises fixed means along the direction of insertion of the card, for carrying out a marking on the card body, when the card is in the processing position, at a site representing the amount memorised in the card, as a function of the results of the said comparison.

2. Processing device according to Claim 1, characterised in that the said processing means comprise means (70, 74, 76) for comparing the amount already used up with n predetermined amount thresholds ($N_1$, $N_5$), and means (60, 62, 134, 136, 138) for commanding, in response to the said comparison means, the marking of the body of the card at a site corresponding to that of the said thresholds which has been reached.

3. Processing device according to Claim 2, characterised in that the marking means comprise n distinct marking elements, each marking element (50 to 58, 50' to 58', 122a to 122f) being associated with one of the said thresholds.

4. Processing device according to Claim 3, characterised in that the said marking elements are heating elements (50 to 58, 50' to 58'), each heating element being able to produce a notch on the edge of the card (14, 15) when the latter is powered.

5. Processing device according to Claim 2, characterised in that the said n thresholds share out the total capacity of the card, in terms of amounts, in n equal parts.

6. Processing device according to Claim 2, characterised in that the first of the n thresholds corresponds to a part of the total capacity of the card, in terms of amount, which is greater than the parts of the total capacity of the card separating two consecutive thresholds.

7. Processing device according to Claim 2, characterised in that the marking of the card is produced on the edge of the body of the card which is first inserted into the said processing device.

8. Processing device according to Claim 2, characterised in that the marking of the card is produced on an edge of the body of the card lying parallel to the direction of insertion.

9. Processing device according to Claim 2, characterised in that the marking of the card is produced on one of the main surfaces of the body of the card.

## Patentansprüche

1. System zur Behandlung von elektronischen Speicherkarten für die Lieferung von zu liefernden Leistungen, wobei das System aufweist:

eine Mehrzahl von Speicherkarten (10) und wenigstens eine Behandlungsvorrichtung dieser Karten;

wobei jede Karte einen Körper (12), äußere elektrische Kontaktbereiche (16) und einen integrierten Schaltkreis (18) aufweist, der in dem Körper der Karte angeordnet ist und elektrisch mit den Bereichen verbunden ist, wobei der integrierte Schaltkreis Einrichtungen zum Speichern von Ergebnissen oder Werten im Laufe der Verwendung der Karte aufweist; und

wobei die Behandlungsvorrichtung elektrische Behandlungs- und Zuführeinrichtungen (44) des Schaltkreises der Karte, feste elektrische Verbindungseinrichtungen (40,42), um elektrisch mittels der Kontaktbereiche (16) den Schaltkreis (18) der Karte mit den Behandlungs- und Zuführeinrichtungen (44) zu verbinden, wenn die Karte in einer festen Behandlungsstellung sich befindet, wobei die Behandlungseinrichtungen geeignet sind, in den Speichereinrichtungen der Karte eine Ergebnisinformation zu lesen und das Schreiben eines neuen Ergebnisses oder Wertes in den Speichereinrichtungen zu steuern,

**dadurch gekennzeichnet,** daß die Behandlungseinrichtungen weiterhin Einrichtungen zum Vergleichen des gespeicherten Wertes in dem integrierten Schaltkreis (18) der Karte mit vorbestimmten Schwellenwerten aufweist, und daß die Behandlugnsvorrichtungen feste Einrichtungen gemäß der Einführrichtung der Karte aufweist, um eine Markierung auf dem Körper der Karte zu erzeugen, wenn diese sich in Behandlungsstellung befindet an einer dem in der Karte gespeicherten Wert entsprechenden Stelle in Abhängigkeit der Ergebnisse des genannten Vergleichs.

2. Behandlungsvorrichtung nach Anspruch 1, **dadurch gekennzeichnet,** daß die Behandlungseinrichtungen Einrichtungen (70,74,76) zum Vergleichen des bereits verbrauchten Werts bei n vorbestimmten Schwellenwerten ($N_1$, $N_5$) und Einrichtungen (60, 62, 134, 136, 138) aufweisen, um in Antwort auf die Vergleichereinrichtungen die Markierung des Körpers der Karte an einer Stelle zu steuern, die jener der erreichten Schwellen entspricht.

3. Behandlungsvorrichtung nach Anspruch 2, **dadurch gekennzeichnet,** daß die Markierungseinrichtungen n einzelne Markierungselemente aufweisen, wobei jedes Markierungselement (50-58, 50'-58', 122a-122f) einem genannten Schwellenwerte zugeordnet ist.

4. Behandlungsvorrichtung nach Anspruch 3, **dadurch gekennzeichnet,** daß die Markierungselemente Heizelemente (50-58, 50'-58') sind, wobei jedes Heizelement geeignet ist, eine Kerbe auf dem Rand der Karte (14, 15) zu erzeugen, wenn sie gespeist wird.

5. Behandlungsvorrichtung nach Anspruch 2, **dadurch gekennzeichnet,** daß die genannten n Schwellenwerte die Gesamtkapazität der Karte in Ergebnissen oder Werten, in n gleiche Teile aufteilen.

6. Behandlungsvorrichtung nach Anspruch 2, **dadurch gekennzeichnet,** daß der erste der n Schwellenwerte einem Bereich der Gesamtkapazität der Karte im Wert entspricht, der größer ist als die Bereiche der Gesamtkapazität der Karte, die zwei aufeinanderfolgende schwellenwerte trennen.

7. Behandlungsvorrichtung nach Anspruch 2, **dadurch gekennzeichnet,** daß die Markierung der Karte am Rand des Körpers der Karte erzeugt wird, der als erster in die Behandlungsvorrichtung eingeführt wird.

8. Behandlungsvorrichtung nach Anspruch 2, **dadurch gekennzeichnet,** daß die Markierung der Karte auf dem Rand des Körpers der Karte erzeugt wird, der parallel zur Einführrichtung angeordnet ist.

9. Behandlungsvorrichtung nach Anspruch 2, **dadurch gekennzeichnet,** daß die Markierung der Karte auf einer der Hauptseiten des Körpers der Karte erzeugt wird.

## FIG.1

F →

## FIG.2

F →

UNITE TRAIT.

ALIM.

10

## FIG. 2a

AFFICH. 82

DECOD. 80

70a

70

N → COMPT. 72i

72a

74a

74i

DECOD. 74

74n

76a

76

COMPT. 76

76b 76n

84

44a

62a 44b 60a

50
52 SELECT. ALIM.
54
56 62e 62 60
58

## FIG. 3a

136 136a

138a

138

140

134b 134c

134 SELECT. 134a 44a 44

142a 144a 142f 44b CIRC. ← N
144f TRAIT.

132a 132f

130a 130f

120a 120b 120f

122a

## FIG. 3

120a   120b   130   132
120f   128
126   124   122
36   15
30   14   39
F   12
16

38

## FIG. 4

32
40   42
30   100a
44
UNITE
TRAIT.
F
100
34   12   16   56'   100b
62   60
ALIM.

## FIG. 5

## FIG. 5a